# FASCICULE DE BREVET EUROPEEN

(11) **EP 4 027 582 B1**
(45) Date de publication et mention de la délivrance du brevet: **09.10.2024**
(21) Numéro de dépôt: 22150227.1
(22) Date de dépôt: 04.01.2022
(51) Int. Cl.: H04L 9/40, H04L 45/00, G06F 21/12

(54) **PROCEDE DE SIGNALISATION D'UNE UTILISATION D'ADRESSE IP ILLICITE**
VERFAHREN ZUR SIGNALISIERUNG EINER NUTZUNG EINER ILLEGALEN IP-ADRESSE
METHOD FOR SIGNALLING AN ILLICIT USE OF AN IP ADDRESS

(30) Priorité: 07.01.2021 FR 2100105
(43) Date de publication de la demande: 13.07.2022
(73) Titulaire: Sagemcom Broadband SAS, 92270 Bois-Colombes (FR)
(72) Inventeur: FADLE, Hatim, 92500 RUEIL MALMAISON (FR); ALARCON, Laurent, 92500 RUEIL MALMAISON (FR)
(74) Mandataire: Cabinet Le Guen Maillet

(56) Documents cités:
- US-A1- 2020 221 361
- ETIENNE GALLET DE SANTERRE ET AL: "Solving the Ingress Filtering Issue in an IPv6 Multihomed Home Network", NETWORKS (ICN), 2010 NINTH INTERNATIONAL CONFERENCE ON, IEEE, PISCATAWAY, NJ, USA, 11 April 2010 (2010-04-11), pages 272 - 278, XP031681891, ISBN: 978-1-4244-6083-0
- PYNBIANGLUT HADEM ET AL: "SMITE", SECURITY OF INFORMATION AND NETWORKS, ACM, 2 PENN PLAZA, SUITE 701NEW YORKNY10121-0701USA, 13 October 2017 (2017-10-13), pages 171 - 177, XP058385841, ISBN: 978-1-4503-5303-8, DOI: 10.1145/3136825.3136878
- FABRICE J RYBA ET AL: "Amplification and DRDoS Attack Defense -- A Survey and New Perspectives", ARXIV.ORG, CORNELL UNIVERSITY LIBRARY, 201 OLIN LIBRARY CORNELL UNIVERSITY ITHACA, NY 14853, 29 May 2015 (2015-05-29), XP080803400

## Description

### DOMAINE TECHNIQUE

La présente invention concerne le domaine du routage de messages entre des réseaux de communication et plus précisément le routage de messages émis par un dispositif qui utilise une adresse IP illicite, i.e. invalide, dans un réseau de communication.

### ETAT DE LA TECHNIQUE ANTERIEURE

Un réseau de communication local peut communiquer avec un réseau de communication étendu à l'aide d'un routeur, permettant d'interconnecter les deux réseaux, et en partageant un même protocole, comme par exemple le protocole IP (« Internet Protocol » en anglais). Une adresse IP doit ainsi être attribuée à chaque dispositif du réseau local pour que ledit dispositif puisse communiquer avec le réseau étendu. L'attribution d'adresses IP peut être effectuée selon différentes procédures telles que la procédure RFC 4862 (RFC pour « Request For Comments » en anglais) ou la procédure RFC 8415, dans lesquelles le routeur ou un serveur DHCP (« Dynamic Host Configuration Protocol » en anglais) attribue tout ou partie d'une adresse IP à un dispositif du réseau de communication local ayant effectué une demande adresse IP.

Toutefois, il arrive qu'une adresse IP utilisée par un dispositif soit illicite, i.e. invalide, car elle n'est pas reconnue par le routeur. L'adresse IP est alors considérée illicite. Par exemple, une adresse IP est parfois attribuée à un dispositif avec un bail, autrement dit avec une durée de vie au bout de laquelle le dispositif doit demander un renouvellement de l'adresse IP. Lorsque le dispositif n'effectue pas une telle demande de renouvellement de son adresse IP, l'adresse IP expire et n'est alors plus reconnue par le routeur. Selon un autre exemple, le routeur peut envoyer une notification pour modifier une adresse IP ou un préfixe d'adresse IP attribuée à un dispositif. Or, si la notification n'est pas prise en compte par ledit dispositif, le dispositif continue d'utiliser une ancienne adresse IP devenue illicite. Dans certains cas, l'adresse IP d'un dispositif est attribuée manuellement et peut s'avérer erronée.

Un dispositif utilisant une adresse IP illicite ne peut pas être aisément informé de l'invalidité de son adresse IP puisqu'il n'est pas possible d'utiliser ladite adresse IP illicite pour communiquer avec ledit dispositif. En outre, l'utilisation d'une adresse IP illicite par un dispositif peut générer un trafic encombrant et inutile sur le réseau étendu.

Le document « Solving The Ingress Filtering Issue in an IPv6 Multihomed Home Network », Etienne Gallet de Santerre et al., Networks (ICN), 11 avril 2010, décrit un mécanisme de sélection de routage par défaut basé sur l'adresse source d'un paquet, résolvant des problèmes de filtrage d'entrée mis en oeuvre pour prévenir des attaques par usurpation d'adresse.

Il est alors souhaitable de pallier ces inconvénients de l'état de la technique. Il est notamment souhaitable de fournir une solution qui permette de signaler à un dispositif une utilisation d'une adresse IP illicite. Il est en outre souhaitable de proposer une solution permettant de corriger une adresse IP illicite utilisée par un dispositif. Il est de plus souhaitable de proposer une solution qui permette d'éviter d'encombrer le réseau de communication local et le réseau de communication étendu avec des données émises par un dispositif utilisant une adresse IP illicite.

### EXPOSE DE L'INVENTION

Un objet de la présente invention est de proposer un procédé de signalisation d'une utilisation d'une adresse IP invalide dans un réseau de communication local, le réseau de communication local étant relié à un autre réseau de communication par l'intermédiaire d'un routeur, une adresse IP invalide étant une adresse IP expirée ou inconnue du routeur. Le procédé comporte les étapes, réalisées par le routeur, de : recevoir un paquet d'au moins un dispositif appartenant audit réseau de communication local, ledit paquet reçu comprenant une adresse IP source invalide ; générer un paquet de message d'erreur et marquer ledit paquet de message d'erreur avec une marque prédéfinie ; et renvoyer audit au moins un dispositif le paquet de message d'erreur marqué en utilisant une table de routage annexe redirigeant chaque paquet vers le réseau de communication local et une règle de routage appliquant ladite table de routage annexe à chaque paquet marqué avec ladite marque prédéfinie.

Ainsi, il est possible de signaler l'utilisation d'une adresse IP illicite au dispositif utilisant une adresse IP illicite en lui envoyant un message d'erreur. Le dispositif utilisant une adresse IP illicite peut alors réagir à la réception dudit message d'erreur afin de demander une réattribution ou une modification de son adresse IP. En outre, l'envoi d'un message d'erreur vers l'adresse IP illicite est empêché, ce qui évite l'encombrement de l'autre réseau.

Selon un mode de réalisation particulier, le procédé comporte en outre de marquer le paquet reçu avec ladite marque prédéfinie et rejeter le paquet reçu.

Selon un mode de réalisation particulier, le procédé comprend en outre : enregistrer dans une table, dite table des adresses IP invalides, un identifiant du dispositif utilisant ladite adresse IP source invalide, en association avec un compteur de paquets reçus initialisé à une valeur initiale, et en association avec une date de réception dudit paquet reçu, dite date de première réception, si ledit identifiant est absent de la table des adresses IP invalides ; et actualiser la table des adresses IP invalides si l'identifiant dudit dispositif est présent dans la table des adresses IP invalides.

Selon un mode de réalisation particulier, une première période étant définie avec une première durée prédéfinie, ladite première période étant comptée à partir de la date de première réception, une deuxième période étant définie avec une deuxième durée prédéfinie, ladite deuxième durée prédéfinie étant plus courte que la première durée prédéfinie et se terminant en même temps que la première période, actualiser la table des adresses IP invalides comprend incrémenter le compteur de paquets reçus pour chaque paquet reçu pendant la deuxième période si une date de déconnexion dudit dispositif n'est pas renseignée dans la table des adresses IP invalides.

Selon un mode de réalisation particulier, une première période étant définie avec une première durée prédéfinie, ladite première période étant comptée à partir d'une date de déconnexion dudit dispositif, une deuxième période étant définie avec une deuxième durée prédéfinie, ladite deuxième durée prédéfinie étant plus courte que la première durée prédéfinie et se terminant en même temps que la première période, actualiser la table des adresses IP invalides comprend incrémenter le compteur de paquets reçus pour chaque paquet reçu pendant la deuxième période, si ladite date de déconnexion dudit dispositif est renseignée dans la table des adresses IP invalides.

Selon un mode de réalisation particulier, le procédé comprend en outre l'étape de supprimer l'identifiant de la table des adresses IP invalides dans le cas où la première période est écoulée et le compteur de paquets reçus est égal à ladite valeur initiale.

Selon un mode de réalisation particulier, le procédé comprend en outre l'étape de forcer le dispositif à réinitialiser son interface réseau en le déconnectant dudit réseau de communication local, enregistrer la date de déconnexion dans ladite table des adresses IP invalides et réinitialiser ledit compteur de paquets reçus à la valeur initiale, dans le cas où la première période est écoulée et le compteur de paquets reçus est différent de ladite valeur initiale.

Ainsi, il est possible d'identifier si un dispositif utilisant une adresse IP illicite remédie par lui-même à l'utilisation de ladite adresse IP illicite ou persiste à utiliser ladite adresse IP illicite. Il est en outre possible de forcer un dispositif qui persiste à utiliser une adresse IP illicite à demander une réattribution ou effectuer une modification de son adresse IP lors d'une réinitialisation de son interface réseau.

Selon un mode de réalisation particulier, le procédé comporte en outre : empêcher, pendant une durée de quarantaine configurée, toute communication avec ledit dispositif lorsque la première période est écoulée, si une date de déconnexion d'une interface réseau dudit dispositif est renseignée dans ladite table, et si le compteur de paquets reçus est différent de la valeur initiale.

Selon un mode de réalisation particulier, la durée de quarantaine configurée augmente à chaque nouvelle quarantaine, une quarantaine étant une période pendant laquelle toute communication avec le dispositif est empêchée.

Selon un mode de réalisation particulier, la durée de quarantaine est égale à n*Dt où n est un nombre de quarantaines et Dt est une durée initiale de quarantaine.

Selon un mode de réalisation particulier, la durée de quarantaine est égale à 2^{(*n*-1)} * *Dt* où n est un nombre de quarantaines et Dt est une durée initiale de quarantaine.

Selon un mode de réalisation particulier, le premier réseau de communication et l'autre réseau de communication utilisent le protocole de communication IPv6.

Ainsi, lorsqu'un dispositif persiste à utiliser une adresse IP illicite, même après avoir été forcé à réinitialiser son interface réseau, il est possible d'éviter un encombrement du réseau de communication local en raison des paquets émis par ledit dispositif et de messages d'erreur envoyés.

L'invention concerne également un routeur reliant un réseau de communication local à un autre réseau de communication. Le routeur comporte : des moyens pour recevoir un paquet d'au moins un dispositif appartenant audit réseau de communication local, ledit paquet reçu comprenant une adresse IP source invalide, une adresse IP invalide étant une adresse IP expirée ou inconnue du routeur ; des moyens pour générer un paquet de message d'erreur et pour marquer ledit paquet de message d'erreur avec une marque prédéfinie ; et des moyens pour renvoyer audit au moins un dispositif le paquet de message d'erreur marqué en utilisant une table de routage annexe redirigeant chaque paquet vers le réseau de communication local et une règle de routage appliquant ladite table de routage annexe à chaque paquet marqué avec ladite marque prédéfinie.

Selon un mode de réalisation particulier, le routeur comporte en outre : des moyens pour enregistrer dans une table, dite table des adresses IP invalides, un identifiant du dispositif utilisant ladite adresse IP source invalide, en association avec un compteur de paquets reçus initialisé à une valeur initiale, et en association avec une date de réception dudit paquet reçu, dite date de première réception, si ledit identifiant est absent de la table des adresses IP invalides. Le routeur comporte en outre des moyens pour actualiser la table des adresses IP invalides, si l'identifiant dudit dispositif est présent dans la table des adresses IP invalides.

Selon un mode de réalisation particulier, lesdits moyens pour actualiser la table des adresses IP invalides comprennent des moyens pour incrémenter le compteur de paquets reçus pour chaque paquet reçu pendant une deuxième période si une date de déconnexion dudit dispositif n'est pas renseignée dans la table des adresses IP invalides, une première période étant définie avec une première durée prédéfinie, la première période étant comptée à partir de la date de première réception, la deuxième période étant définie avec une deuxième durée prédéfinie, la deuxième durée prédéfinie étant plus courte que la première durée prédéfinie et se terminant en même temps que la première période.

Selon un mode de réalisation particulier, lesdits moyens pour actualiser la table des adresses IP invalides comprennent des moyens pour incrémenter le compteur de paquets reçus pour chaque paquet reçu pendant une deuxième période, si ladite date de déconnexion dudit dispositif est renseignée dans la table des adresses IP invalides, une première période étant définie avec une première durée prédéfinie, la première période étant comptée à partir d'une date de déconnexion dudit dispositif, la deuxième période étant définie avec une deuxième durée prédéfinie, la deuxième durée prédéfinie étant plus courte que la première durée prédéfinie et se terminant en même temps que la première période.

Selon un mode de réalisation particulier, le routeur comporte en outre des moyens pour supprimer l'identifiant de la table des adresses IP invalides dans le cas où la première période est écoulée et le compteur de paquets reçus est égal à ladite valeur initiale.

Selon un mode de réalisation particulier, le routeur comporte en outre des moyens pour forcer le dispositif à réinitialiser son interface réseau en le déconnectant dudit réseau de communication local, enregistrer la date de déconnexion dans ladite table des adresses IP invalides et réinitialiser ledit compteur de paquets reçus à la valeur initiale, dans le cas où la première période est écoulée et le compteur de paquets reçus est différent de ladite valeur initiale.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur.

L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication local relié à un réseau de communication étendu par l'intermédiaire d'un routeur, selon un mode de réalisation ;
[Fig. 2] illustre schématiquement un procédé de signalisation d'une utilisation d'une adresse IP illicite dans le réseau de communication local, selon un mode de réalisation ;
[Fig. 3] illustre schématiquement un procédé d'identification d'un dispositif qui persiste à utiliser une adresse IP illicite dans le réseau de communication local, selon un mode de réalisation ;
[Fig. 4] illustre schématiquement un procédé de décision d'incrémentation de compteurs effectué dans le procédé d'identification d'un dispositif persistant à utiliser une adresse IP illicite dans le réseau de communication local, selon un mode de réalisation ;
[Fig. 5] illustre schématiquement un procédé de correction d'une utilisation d'une adresse IP illicite dans le réseau de communication local, selon un mode de réalisation ;
[Fig. 6] illustre schématiquement un procédé de mise en quarantaine effectué dans le procédé de correction d'une utilisation d'une adresse IP illicite dans le réseau de communication local, selon un mode de réalisation ;
[Fig. 7] illustre schématiquement une architecture matérielle du routeur implémentant le procédé de signalisation d'une utilisation d'une adresse IP illicite dans le réseau de communication local, selon un mode de réalisation.

### EXPOSE DETAILLE DE MODES DE REALISATION

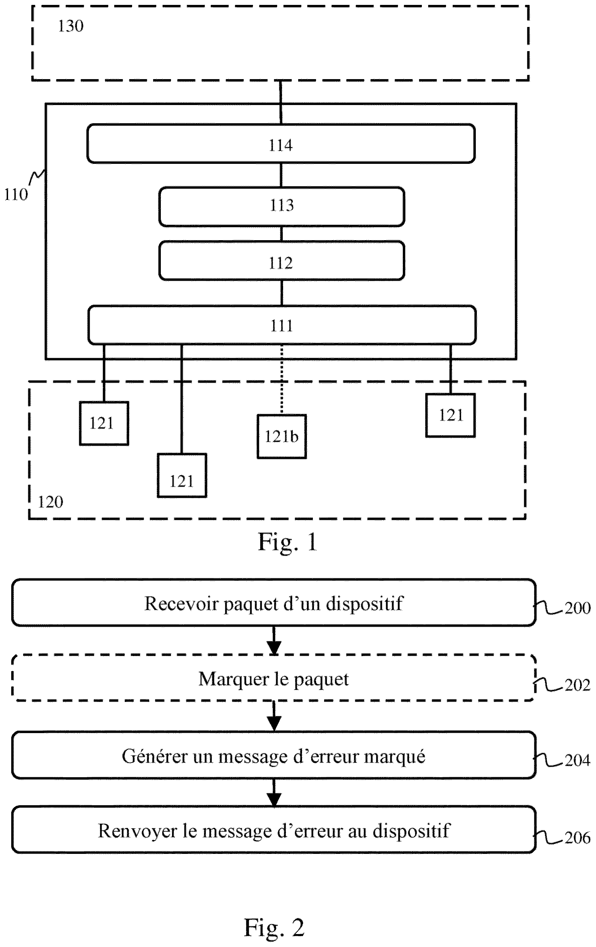

La **Fig. 1** illustre schématiquement un réseau de communication local, dit réseau local 120 relié à un réseau de communication étendu, dit réseau étendu 130 par l'intermédiaire d'un routeur 110, selon un mode de réalisation particulier.

Le routeur 110 comporte un pare-feu 112 et un module de routage 113. Le routeur 110 comporte en outre une première interface 111 permettant de connecter le routeur 110 au réseau local 120 ainsi qu'une seconde interface 114 permettant de connecter le routeur 110 au réseau étendu 130.

Le module de routage 113 a pour rôle de router ou diriger un paquet reçu par le routeur 110 en fonction de l'adresse IP de destination dudit paquet. Le module de routage 113 comporte une table de routage principale et peut comporter en outre une ou plusieurs tables de routage annexes. Chaque table de routage comprend une ou plusieurs routes qui indique vers quelle interface 111, 114 doit être dirigé un paquet en fonction de l'adresse IP de destination dudit paquet. Le module de routage 113 comporte en outre au moins une règle de routage qui définit quelle table de routage utiliser pour router un paquet reçu par le routeur 110, en fonction de critères prédéfinis.

Selon un mode de réalisation particulier, le module de routage 113 comporte une table de routage principale comportant deux routes. Une première route dirige chaque paquet dont l'adresse IP de destination est reconnue comme appartenant au réseau local 120, vers la première interface 111 d'où il est envoyé vers le réseau local 120, et une deuxième route dirige par défaut chaque paquet dont l'adresse IP de destination n'appartient pas au réseau local 120 vers la seconde interface 114 d'où il est envoyé vers le réseau étendu 130.

Le module de routage 113 comporte en outre une table de routage annexe comportant une unique route décrite ci-après en relation avec la Fig. 2 et qui dirige chaque paquet vers la première interface 111 d'où il est envoyé vers le réseau local 120.

Le module de routage 113 comporte également une première règle de routage qui applique la table de routage principale à chaque paquet reçu, à l'exception des paquets concernés par une deuxième règle de routage décrite ci-après en relation avec la Fig. 2.

Le routeur 110 comporte en outre un pare-feu 112. Le pare-feu 112 met en oeuvre des règles de filtrage qui permettent de sélectionner certains paquets reçus depuis le réseau local 120 ou émis vers le réseau local 120 en fonction de critères tels que l'adresse IP de destination ou l'adresse IP source dudit paquet. L'adresse IP de destination d'un paquet est l'adresse IP que le paquet doit atteindre tandis que l'adresse IP source d'un paquet correspond à l'adresse IP d'un terminal ayant émis ledit paquet. Un terminal correspond par exemple à un terminal accessible via le réseau étendu 130 ou à un dispositif 121 appartenant au réseau local 120. Les règles de filtrage permettent en outre d'effectuer des actions sur un paquet sélectionné. Une première action possible est d'accepter un paquet, ce qui comprend de router ledit paquet vers son adresse IP de destination. Une deuxième action est de rejeter un paquet, ce qui comprend de ne pas router ledit paquet et d'émettre en outre un message d'erreur vers l'adresse IP source, autrement dit adressé au dispositif 121 ayant émis ledit paquet. Une troisième action est d'abandonner ou rejeter silencieusement un paquet, ce qui comprend de supprimer ledit paquet sans le router et de ne pas émettre de message d'erreur. Une quatrième action est d'enregistrer une trace d'un paquet, dans un journal par exemple.

Le réseau local 120 ou réseau LAN (« Local Area Network » en anglais) comporte au moins un dispositif 121 connecté au routeur 110 par la première interface 111. Chaque dispositif 121 peut communiquer dans le réseau local 120 en échangeant des données avec la première interface 111 au niveau de la couche de liaison du modèle OSI (« Open Systems Interconnection » en anglais). Par exemple, un dispositif 121 communique avec la première interface 111 au moyen d'un protocole Ethernet, d'un commutateur réseau (ou « switch » en anglais) ou d'un protocole de communication sans-fil Wi-Fi. Lorsque le réseau local 120 comporte différents segments utilisant par exemple différentes technologies, la première interface 111 est un pont réseau permettant d'interconnecter des segments distincts du réseau local 120.

Selon un exemple de réalisation, le réseau étendu 130 est un réseau WAN (« Wide Area Network » en anglais) tel qu'intemet. Selon un autre exemple, le réseau local 120 est un sous-réseau d'un autre réseau plus large, dit réseau étendu 130.

Le réseau local 120 et le réseau étendu 130 peuvent communiquer entre eux en s'échangeant des données, sous forme de paquets, au niveau de la couche réseau du modèle OSI grâce à l'utilisation d'un protocole commun tel que le protocole IP (« Internet Protocol » en anglais). Le protocole IPv6 (version 6 de l'« Internet Protocol ») est avantageusement utilisé. Une adresse IP doit donc être attribuée à chaque dispositif 121 du réseau local 120 pour que ledit dispositif 121 puisse communiquer avec le réseau étendu 130.

L'adresse IP d'un dispositif 121 peut être attribuée de différentes manières. Par exemple, selon une première procédure spécifique au protocole IPv6 appelée RFC 4862 (RFC pour « Request For Comments » en anglais), l'adresse IP d'un dispositif 121 est attribuée, après sollicitation dudit dispositif 121, par le routeur 110 qui propose un préfixe d'adresse IP. Le dispositif 121 choisit ensuite un suffixe d'adresse IP qui n'est pas déjà utilisé dans le réseau local 120 pour construire une adresse IP. Selon une deuxième procédure spécifique au protocole IPv6 appelée RFC 8415, le dispositif 121 sollicite un serveur DHCP (« Dynamic Host Configuration Protocol » en anglais), le serveur DHCP propose en retour une adresse IP au dispositif 121, et lorsque l'adresse IP est acceptée par le dispositif 121, le serveur DHCP assigne ladite adresse IP avec un bail d'une durée de vie définie. Pour conserver ladite adresse IP au-delà de la durée de vie, le dispositif 121 doit renouveler son bail périodiquement. Alternativement, l'adresse IP d'un dispositif 121 est parfois attribuée manuellement.

Lorsqu'un dispositif 121b utilise une adresse IP illicite, autrement dit une adresse IP qui est invalide car expirée ou inconnue du routeur 110, ladite adresse IP n'est pas reconnue par le routeur 110 et ne peut donc pas être utilisée pour communiquer avec ledit dispositif 121b. Cela peut se produire lorsqu'une adresse IP attribuée manuellement est erronée ou encore lorsque la durée de vie de l'adresse IP attribuée est expirée. Par exemple, cela se produit si le dispositif 121b ne renouvelle pas son bail dans le cadre de la procédure RFC 8415. Selon un autre exemple, dans le cadre de la procédure RFC 4862, le routeur 110 peut envoyer un message au dispositif 121b pour modifier le préfixe de son adresse IP en assignant une durée de vie nulle au préfixe précédemment attribué. Cependant, il arrive parfois que le message en question ne soit pas pris en compte par le dispositif 121b qui continue d'utiliser une ancienne adresse IP expirée ou devenue illicite.

La **Fig. 2** illustre schématiquement un procédé de signalisation d'une utilisation d'une adresse IP illicite dans le réseau local 120 selon un mode de réalisation. Le procédé de signalisation est implémenté par le routeur 110.

Dans une étape 200, le routeur 110 réceptionne un paquet en provenance d'un dispositif 121b du réseau local 120, ledit dispositif 121b utilisant une adresse IP illicite. Autrement dit, le routeur 110 réceptionne un paquet, ledit paquet comprenant une adresse IP source illicite. Ladite adresse IP du dispositif 121b n'est pas comprise dans un espace d'adresses du routeur 110 et est donc identifiée comme illicite par le routeur 110. En outre, le routeur 110 peut identifier une adresse physique, dite adresse MAC (« Media Access Control » en anglais) du dispositif 121b.

Optionnellement, dans le cadre du protocole IPv6, le routeur 110 effectue, dans une étape 202 suivante, un marquage du paquet en associant audit paquet une marque prédéfinie. Pour cela, le pare-feu 112 du routeur 110 implémente une règle de filtrage qui s'applique à chaque paquet reçu en provenance d'un dispositif 121b utilisant une adresse IP illicite. La règle de filtrage en question indique d'effectuer une action de marquage dudit paquet avec ladite marque prédéfinie.

Par exemple, dans le cadre du protocole IPv6, une telle règle implémentée par un système d'exploitation Linux peut s'écrire : « ip6tables -A FORWARD -i br0 -j MARK --set-xmark 0x10000/0xffffffff ».

Cette règle définit les éléments suivants :
- A FORWARD indique d'ajouter une règle à la chaine de routage,
- i br0 spécifie l'interface 111 du routeur sur laquelle le paquet est reçu,
- j MARK indique l'action à appliquer en l'occurrence un marquage avec la marque prédéfinie 0x10000, et

0xffffffff indique que la marque prédéfinie est appliquée entièrement, sans être altérée.

Dans une étape 204, le routeur 110 génère, sous forme de paquet, un message d'erreur marqué avec une marque prédéfinie, i.e. avec la marque prédéfinie à l'étape 202. Par exemple, dans le cadre du protocole IPv6, le routeur 110 rejette le paquet reçu à l'étape 200, autrement dit supprime ledit paquet reçu et émet, en réponse au marquage effectué à l'étape 202, un paquet de message d'erreur marqué avec la marque prédéfinie vers ledit dispositif 121b utilisant une adresse IP illicite. Autrement dit, le paquet de message d'erreur est généré avec la même marque que celle du paquet rejeté.

Pour cela, la règle suivante peut être appliquée :
« ip6tables -A FORWARD -p ipv6 -i br0 -j REJECT --reject-with icmp6-policy-fail».

Cette règle définit les éléments suivants :
- A FORWARD indique d'ajouter une règle à la chaine de routage
- p ipv6 indique que la règle s'applique aux paquets de protocole ipv6,
- i br0 spécifie l'interface 111 du router et indique que la règle s'applique aux paquets qui sont reçus sur ladite interface 111,
- j REJECT --reject-with icmp6-policy-fail indique l'action à appliquer en l'occurrence le rejet du paquet et l'envoi d'un paquet de message d'erreur selon le code d'erreur icmp6-policy-fail, ledit code d'erreur définissant un type de paquet généré.

En outre, le paquet de message d'erreur étant généré par un noyau du système d'exploitation du routeur 110, il peut être nécessaire d'activer une fonction du noyau du système d'exploitation pour générer ledit paquet de message d'erreur marqué. Dans le cas du système d'exploitation linux, la fonction fwmark_reflect peut être utilisée. Elle permet de marquer un paquet réponse avec la même marque que celle utilisée pour marquer le paquet auquel il répond, i.e. que le paquet rejeté.

Dans une étape 206, le routeur 110 dirige le message de réponse marqué vers ledit dispositif 121b utilisant une adresse IP illicite. Le module de routage 113 du routeur 110 implémente la table de routage annexe comportant une route unique qui dirige chaque paquet par défaut vers la première interface 111 du routeur 110. Le module de routage 113 implémente en outre la deuxième règle de routage, prioritaire par rapport à la règle de routage principale définie précédemment en relation avec la Fig. 1, qui applique ladite table de routage annexe à chaque paquet marqué avec la marque prédéfinie de sorte que la table de routage principale ne s'applique pas à un paquet marqué avec ladite marque prédéfinie. Ainsi, chaque paquet marqué avec la marque prédéfinie et non rejeté donc non supprimé par le pare-feu 112 (notamment les paquets de messages d'erreur marqués), est envoyé vers le réseau local 120 à destination du dispositif 121b identifié par son adresse MAC. Le dispositif 121b est ainsi informé de son utilisation d'une adresse IP illicite. La table de routage annexe associée à la deuxième règle de routage permet en outre d'éviter d'envoyer vers le réseau étendu 130 un paquet de message d'erreur dont la destination est une adresse IP illicite, autrement dit une adresse IP n'appartenant pas au réseau local 120, et qui serait donc envoyé vers le réseau étendu 130 avec la table de routage principale. Notons que lorsque le paquet de message d'erreur est reçu par la première interface 111 du routeur 110, l'interface 111 peut identifier l'adresse MAC du dispositif 121b à l'aide d'une table associant une adresse MAC à une adresse IP, l'adresse IP pouvant être valide ou invalide. Alternativement, l'interface 111 peut identifier l'adresse MAC du dispositif 121b en utilisant une procédure de résolution d'adresse MAC.

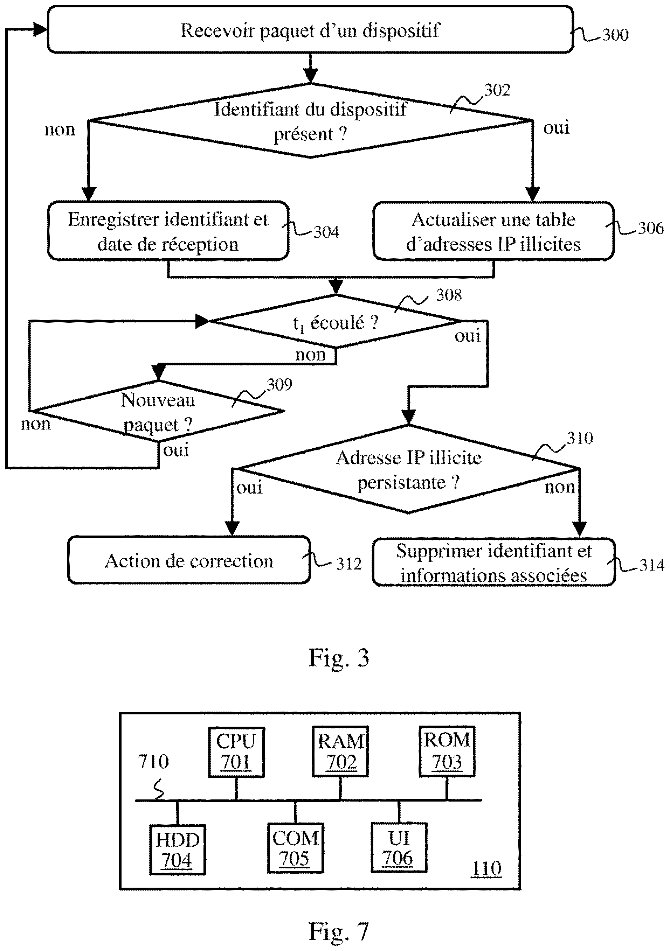

La **Fig. 3** illustre schématiquement, selon un mode de réalisation, un procédé d'identification d'un dispositif 121 persistant à utiliser une adresse IP illicite. Le procédé d'identification d'un dispositif 121 persistant à utiliser une adresse IP illicite vise à comptabiliser des paquets provenant d'un dispositif 121b utilisant une adresse IP illicite sur une durée prédéfinie afin de pouvoir déterminer si ledit dispositif 121b persiste à utiliser une adresse IP illicite au cours du temps sans parvenir à remédier lui-même à l'utilisation de ladite adresse IP illicite. Dans une étape 300 identique à l'étape 200, le routeur 110 réceptionne à une date t un paquet en provenance d'un dispositif 121b, ledit dispositif 121b utilisant une adresse IP illicite. Ladite adresse IP du dispositif 121b est identifiée comme illicite par le routeur 110. Le routeur 110 identifie un identifiant du dispositif 121b tel que son adresse MAC. En outre, le routeur 110 utilise une règle de filtrage qui sélectionne chaque paquet d'un dispositif 121b utilisant une adresse IP illicite et enregistre une trace du paquet comportant l'adresse IP illicite utilisée par ledit dispositif 121b et une date de réception du paquet.

Dans une étape 302, le routeur 110 recherche dans une table, dite table des adresses IP illicites, l'identifiant (e.g. l'adresse MAC) du dispositif 121b en question. Si ledit identifiant (e.g. ladite adresse MAC) du dispositif 121b est présent dans la table des adresses IP illicites, une étape 306 est effectuée. Sinon, une étape 304 est effectuée.

A l'étape 304, le routeur 110 enregistre dans la table des adresses IP illicites, un identifiant, e.g. une adresse MAC, du dispositif 121b utilisant une adresse IP illicite ayant émis le paquet reçu à l'étape 300. Le routeur 110 récupère en outre des informations de la trace enregistrée dudit paquet pour enregistrer, en association avec ledit identifiant (e.g. ladite adresse MAC), optionnellement l'adresse IP illicite utilisée par le dispositif 121b, une date de réception dudit paquet, dite date de première réception, ainsi qu'un premier compteur C1 de paquets et un deuxième compteur C2 de paquets. Le premier compteur C1 est initialisé à une première valeur V1 initiale et incrémenté d'une valeur d'incrémentation k permettant de comptabiliser la réception du premier paquet, et le deuxième compteur C2 de paquets est initialisé à une seconde valeur V2 initiale. Par exemple, le premier compteur C1 et le deuxième compteur C2 sont initialisés à 0 (V1=V2=0) et le premier compteur C1 est en outre incrémenté de 1 (k=1). Une étape 308 est ensuite effectuée.

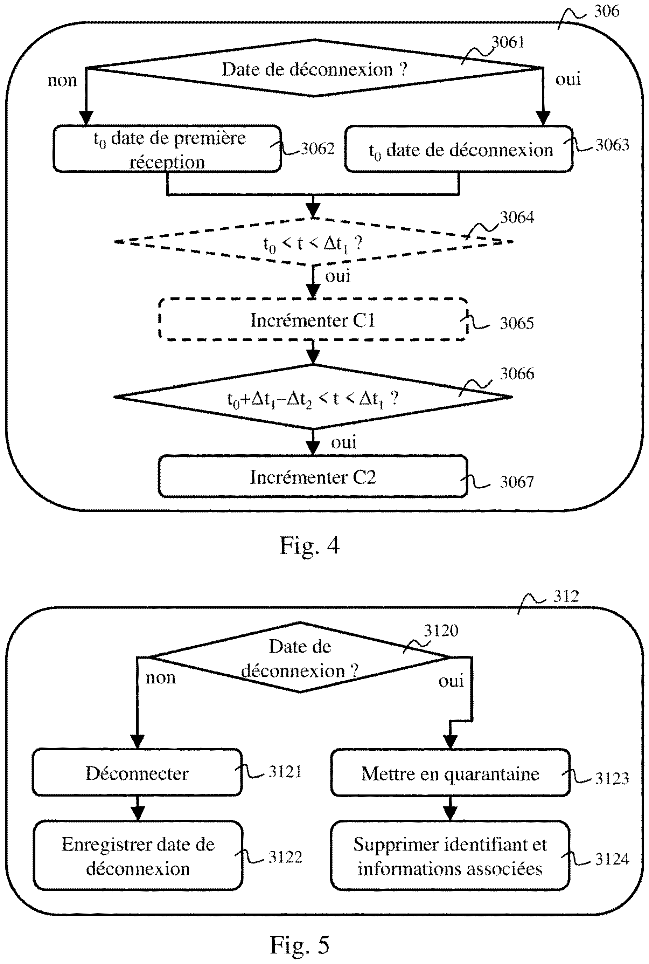

A l'étape 306, le routeur 110 actualise la table des adresses IP illicites comprenant l'identifiant (e.g. l'adresse MAC) du dispositif 121b en question. Pour cela, le routeur 110 récupère des informations de la trace enregistrée du paquet et détermine s'il faut incrémenter le compteur C1 et/ou le compteur C2 en fonction de la date de réception du paquet selon un procédé de décision d'incrémentation décrit à la Fig. 4. Le premier compteur C1 est incrémenté si le paquet est reçu pendant une première période de première durée prédéfinie Δt₁ et le deuxième compteur C2 est incrémenté si le paquet est reçu pendant une deuxième période, de deuxième durée prédéfinie Δt₂ plus courte que la première durée prédéfinie Δt₁, et se terminant en même temps que la première période. La première durée prédéfinie Δt₁ et la deuxième durée prédéfinie Δt₂ sont suffisamment longues et éloignées l'une de l'autre pour permettre d'identifier qu'un dispositif 121b persiste ou non à utiliser une adresse IP illicite. Par exemple, la première durée prédéfinie Δt₁ est de 120s et la deuxième durée prédéfinie Δt₂ est de 60s. L'étape 308 est ensuite effectuée.

A l'étape 308, le routeur 110 détermine si la première période de première durée Δt₁ prédéfinie est écoulée. Dès que ladite première période est écoulée, une étape 310 est effectuée. Dans le cas où la première période de première durée Δt₁ n'est pas écoulée, une étape 309 est effectuée.

A l'étape 309, le routeur 110 attend de recevoir d'éventuels autres paquets en provenance du dispositif 121b. En cas de réception d'un nouveau paquet contenant l'adresse IP illicite en provenance du dispositif 121b, l'étape 300 est répétée. Sinon, l'étape 308 est répétée. A l'étape 310, le routeur 110 détermine si le dispositif 121b concerné persiste à utiliser une adresse IP illicite. Si le premier compteur C1 et le deuxième compteur C2 sont différents respectivement de la première valeur V1 initiale et de la deuxième valeur V2 initiale, alors le dispositif 121b est considéré comme persistant à utiliser une adresse IP illicite et une étape 312 est effectuée. Dans le cas contraire, notamment si le deuxième compteur C2 est égal à la deuxième valeur V2 initiale, alors le dispositif 121b ne persiste pas à utiliser une adresse IP illicite. Le routeur 110 considère que le dispositif 121b a remédié lui-même à l'utilisation d'une adresse IP illicite, par exemple en modifiant son adresse IP, et une étape 314 est effectuée.

A l'étape 312, le routeur 110 applique une action de correction selon un procédé de correction décrit à la Fig. 5 afin de permettre au dispositif 121b de remédier à l'utilisation d'une adresse IP illicite. Par exemple, une action de correction possible est de déconnecter le dispositif 121b afin de le contraindre à réinitialiser son interface réseau pour se reconnecter au réseau local 120. Dans ce cas, la date de déconnexion du dispositif 121b est enregistrée en association avec l'identifiant (e.g. l'adresse MAC) dudit dispositif 121b et les premier et deuxième compteurs C1 et C2 sont réinitialisés.

A l'étape 314, l'identifiant (e.g. l'adresse MAC) du dispositif 121b est supprimée de la table des adresses IP illicites, ainsi que chaque information enregistrée en association avec ledit identifiant (e.g. ladite adresse MAC).

Le compteur C1 est un compteur optionnel. Dans une variante de réalisation, seul le compteur C2 est alors utilisé.

La **Fig. 4** illustre schématiquement, selon un mode de réalisation, le procédé de décision d'incrémentation du deuxième compteur C2 et optionnellement du premier compteur C1 en fonction de la date de réception du paquet du dispositif 121b concerné. Ledit procédé de décision d'incrémentation correspond à l'étape 306 de la Fig. 3.

Dans une première étape 3061, le routeur 110 identifie si une date de déconnexion est enregistrée en association avec l'identifiant (e.g. l'adresse MAC) du dispositif 121b concerné. La date de déconnexion correspond à une date à laquelle le dispositif 121b a été déconnecté de manière forcée du réseau local 120. Si aucune date de déconnexion n'est enregistrée, une étape 3062 est effectuée. Dans le cas contraire, une étape 3063 est effectuée. Aux étapes 3062 et 3063, le routeur 110 identifie une date de démarrage t0 à partir de laquelle la première période et la deuxième période sont calculées.

A l'étape 3062, la date de démarrage t0 prise en compte est la date de première réception, autrement dit la date à laquelle le premier paquet dudit dispositif 121b a été reçu, telle que décrite à l'étape 304 de la Fig. 3. La première période est donc un premier intervalle temporel de première durée prédéfinie Δt₁ qui débute à la date de première réception. La deuxième période est un deuxième intervalle temporel compris entre un instant t₀+Δt₁-Δt₂ et un instant t₀+Δt₁, la date de démarrage t0 étant la date de première réception. Puis une étape 3064 est effectuée.

A l'étape 3063, la date de démarrage t0 prise en compte est la date de déconnexion du dispositif 121b. La première période est dans ce cas un troisième intervalle temporel de première durée prédéfinie Δt₁ et qui débute à la date de déconnexion. La deuxième période est un quatrième intervalle temporel compris entre un instant t₀+Δt₁-Δt₂ et un instant t₀+Δt₁, la date de démarrage t0 étant la date de déconnexion. Puis l'étape 3064 est effectuée.

A l'étape 3064 optionnelle, le routeur 110 détermine si la date de réception t du paquet est comprise dans la première période. Le routeur 110 identifie pour cela si la date de réception t du paquet se produit dans un délai de première durée Δt₁ comptée à partir de la date de démarrage t0 identifiée à l'étape 3062 ou à l'étape 3063. Si c'est le cas, une étape 3065 est effectuée.

A l'étape 3065 optionnelle, le premier compteur C1 est incrémenté de la valeur d'incrémentation k, par exemple k=1.

Dans une étape 3066, le routeur 110 détermine si la date de réception du paquet est comprise dans la deuxième période. La deuxième période s'étend sur une deuxième durée Δt₂ prédéfinie, plus courte que la première durée Δt₁, et commence à une date égale à t₀+Δt₁-Δt₂ de sorte que la première période et la deuxième période se terminent en même temps. En d'autres termes, le routeur 110 détermine si la date de réception t du paquet est comprise entre un instant t₀+Δt₁-Δt₂ et un instant t₀+Δt₁.

Si c'est le cas, une étape 3067 est effectuée.

A l'étape 3067, le deuxième compteur C2 est incrémenté de la valeur d'incrémentation k. La **Fig. 5** illustre schématiquement, selon un mode de réalisation, un procédé de correction d'une utilisation d'une adresse IP illicite. Le procédé de correction d'une adresse IP illicite est mis en oeuvre lorsqu'un dispositif 121b est considéré comme persistant à utiliser une adresse IP illicite. Le procédé de correction d'une adresse IP illicite vise à choisir et à effectuer une action corrective afin de remédier à l'utilisation de ladite adresse IP illicite. Ledit procédé de correction correspond à l'étape 312 de la Fig. 3.

A l'étape 3120, le routeur 110 identifie si une date de déconnexion est enregistrée en association avec l'identifiant (e.g. l'adresse MAC) du dispositif 121b concerné. Si c'est le cas, une étape 3123 est effectuée. Dans le cas contraire, si aucune date de déconnexion n'est enregistrée, une étape 3121 est effectuée.

A l'étape 3121, le routeur 110 déconnecte le dispositif 121b du réseau local 120 de manière à forcer ledit dispositif 121b à réinitialiser son interface réseau. Le routeur 110 détermine une interface physique dudit routeur 110 à laquelle l'adresse MAC du dispositif 121b est associée puis déconnecte ladite interface physique. Une fois déconnecté, le dispositif 121b est contraint d'effectuer une réinitialisation de son interface réseau pour pouvoir se reconnecter au réseau local 120. Lorsqu'il effectue la réinitialisation de son interface réseau, le dispositif 121b doit envoyer une nouvelle demande d'adresse IP, ladite adresse IP lui étant alors attribuée par le routeur 110 ou par un serveur DHCP parmi des adresses IP disponibles et valides.

Par exemple, si la première interface 111 du routeur 110 est un pont réseau, le routeur 110 identifie l'interface physique à laquelle est connecté le dispositif 121b dans une table associant, pour un dispositif 121, son adresse MAC à une interface physique à laquelle le dispositif 121 est connecté. Le routeur 110 effectue ensuite une réinitialisation d'un port physique correspondant à ladite interface physique du dispositif 121b.

Alternativement, le routeur 110 interroge un périphérique réseau tel qu'un commutateur réseau (ou « switch » en anglais) ou un point d'accès Wi-Fi en envoyant l'adresse MAC du dispositif 121b afin d'identifier si le dispositif 121b est connecté audit périphérique réseau. Si c'est le cas, le routeur 110 envoie un ordre de déconnexion dudit dispositif 121b. Selon un mode de réalisation particulier, le routeur 110 envoie un ordre de déconnexion du dispositif 121b à chaque périphérique réseau et lorsqu'un périphérique réseau identifie une interface physique dudit dispositif 121b ou une connexion audit dispositif 121b, ledit périphérique réseau exécute l'ordre de déconnexion. Le routeur 110 communique avec le périphérique réseau à l'aide d'un pilote de périphérique installé dans ledit routeur 110.

Dans le cas où le périphérique réseau est un commutateur réseau, ledit commutateur réseau, sur réception de l'adresse MAC du dispositif 121b, recherche ladite adresse MAC dans une table similaire à celle d'un pont réseau, associant à chaque adresse MAC d'un dispositif 121 l'interface physique dudit dispositif 121. Le commutateur réseau effectue ensuite une réinitialisation du port physique auquel est connecté le dispositif 121b afin de déconnecter le dispositif 121b utilisant une adresse IP illicite.

Dans le cas où le périphérique réseau est un point d'accès Wi-Fi, ledit point d'accès Wi-Fi recherche le dispositif 121b dans une liste des adresses MAC des dispositifs 121 qui lui sont associés et, si l'adresse MAC dudit dispositif 121b utilisant une adresse IP illicite est identifié, le point d'accès Wi-Fi déconnecte ladite adresse MAC.

Dans une étape 3122 suivante, le routeur 110 enregistre en outre, en association avec l'identifiant (e.g. l'adresse MAC) du dispositif 121b, la date de déconnexion, autrement dit, la date à laquelle le dispositif 121b a été déconnecté de manière forcée du réseau local 120. En outre, le routeur 110 réinitialise le premier compteur C1 de paquets à V1 et le deuxième compteur C2 de paquets à V2.

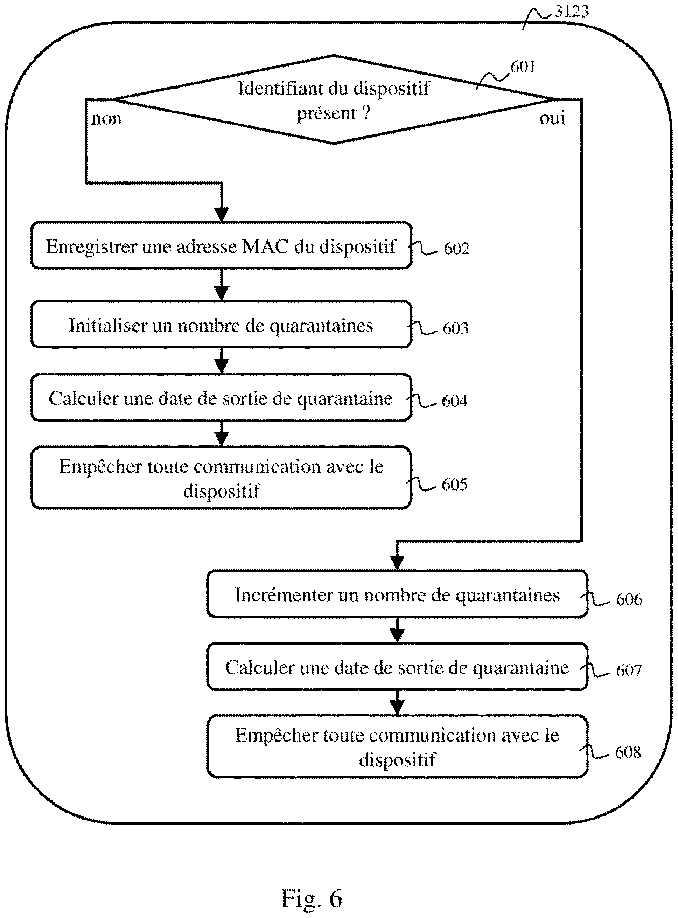

A l'étape 3123, le routeur 110 ordonne une mise en quarantaine du dispositif 120, autrement dit le routeur 110 empêche toute communication avec le réseau local 120 pendant une durée de quarantaine et selon un procédé de mise en quarantaine décrit ci-après en relation avec la Fig. 6. L'étape 3124 est ensuite effectuée.

A l'étape 3124, l'identifiant (e.g. l'adresse MAC) du dispositif 121b est supprimée de la table des adresses IP illicites, ainsi que chaque information enregistrée en association avec ledit identifiant. L'étape 3124 est identique à l'étape 314 de la Fig. 3.

La **Fig. 6** illustre schématiquement un procédé de mise en quarantaine selon un mode de réalisation. Ledit procédé de mise en quarantaine correspond à l'étape 3123 de la Fig. 5 et est mis en oeuvre dans le procédé de signalisation d'une utilisation d'une adresse IP illicite. Dans une étape 601, le routeur 110 recherche dans une table, dite table de quarantaine, l'identifiant (e.g. l'adresse MAC) du dispositif 121b devant être placé en quarantaine. Si l'identifiant (e.g. l'adresse MAC) du dispositif 121b est présente dans la table de quarantaine, une étape 606 est effectuée. Sinon, une étape 602 est effectuée.

A l'étape 602, le routeur 110 enregistre, dans la table de quarantaine, un identifiant du dispositif, e.g. une adresse MAC du dispositif 121b devant être placé en quarantaine.

A l'étape 603, le routeur 110 enregistre en outre, en association avec ledit identifiant (e.g. ladite adresse MAC), un nombre n de quarantaines initialisé à un. Selon un mode de réalisation, le routeur 110 enregistre en outre une date de mise en quarantaine, correspondant à un instant auquel le routeur 110 ordonne la mise en quarantaine du dispositif 121b. Optionnellement, l'adresse IP illicite est également enregistrée.

A l'étape 604, le routeur 110 calcule une date de sortie de quarantaine. La date de sortie de quarantaine est calculée en ajoutant à la date de mise en quarantaine une durée initiale prédéfinie de quarantaine, e.g. 60s.

Dans une étape 605, le routeur 110 empêche toute communication entre le dispositif 121b et le réseau local 120. Pour cela, le routeur 110 identifie une interface physique à laquelle est raccordé le dispositif 121b en question et/ou un périphérique réseau auquel le dispositif 121b est connecté. Le routeur 110 recherche par exemple l'adresse MAC dudit dispositif 121b dans une table d'un pont réseau associant à chaque adresse MAC d'un dispositif 121 l'interface physique dudit dispositif 121 ou interroge un périphérique réseau qui recherche ladite adresse MAC parmi les dispositifs 121 qui sont connectés audit périphérique et identifie l'interface physique ou le port physique correspondant. Le routeur 110 demande ensuite au périphérique réseau auquel le dispositif 121b est connecté de ne pas accepter des paquets dudit dispositif 121b. Par exemple, un commutateur réseau peut ignorer des paquets en provenance d'une adresse MAC et ne pas les retransmettre, et ce jusqu'à la date de sortie de quarantaine. Un point d'accès Wi-Fi peut définir une liste d'adresses MAC interdite d'association audit point d'accès Wi-Fi et désassocier le dispositif 121b de sorte que ledit dispositif 121b ne peut plus s'associer au point d'accès Wi-Fi jusqu'à la date de sortie de quarantaine. Dans le cas d'un périphérique réseau qui ne permet pas d'ignorer des paquets ou d'interdire une association d'un dispositif 121b, le pare-feu 112 du routeur 110 insère une règle de filtrage pour abandonner un paquet en provenance de l'adresse MAC dudit dispositif 121b avant la règle de filtrage utilisée pour rejeter un paquet d'un dispositif 121 utilisant une adresse IP illicite. Ainsi, un paquet du dispositif 121b placé en quarantaine est rejeté silencieusement sans générer de message d'erreur, ce qui évite d'encombrer le réseau local 120.

A l'étape 606, l'identifiant (e.g. l'adresse MAC) du dispositif 121b étant déjà présente dans la table de quarantaine, le nombre n de quarantaines est incrémenté. En outre, la date de mise en quarantaine est actualisée de sorte à correspondre à un instant auquel le routeur 110 ordonne la mise en quarantaine du dispositif 121b une nouvelle fois.

Dans une étape 607, une nouvelle date de sortie de quarantaine est calculée en ajoutant à la date de mise en quarantaine une durée de quarantaine qui dépend du nombre n de quarantaines enregistré.

Par exemple, la durée de quarantaine peut doubler à chaque fois que le dispositif 121b est placé en quarantaine. La durée de quarantaine est ainsi égale à 2^{(*n*-1)} * *Dt* où n est le nombre de quarantaines et Dt est la durée initiale prédéfinie de quarantaine. Selon ledit exemple, si la durée initiale prédéfinie de quarantaine est de 60s, lorsque le dispositif 121b est placé en quarantaine pour la deuxième fois, le nombre n de quarantaines vaut 2 et la durée de quarantaine calculée est de 120s. Lorsque le dispositif 121b est placé en quarantaine pour la troisième fois, le nombre n de quarantaines vaut 3 et la durée de quarantaine calculée de 240s.

Selon un autre exemple, la durée de la quarantaine est proportionnelle au nombre n de quarantaines et est ainsi égale à n*Dt où n est le nombre de quarantaines et Dt est la durée initiale prédéfinie de quarantaine, e.g. égale à 60s.

Dans une étape 608, le routeur 110 empêche toute communication entre le dispositif 121b et le réseau local 120 de manière similaire à l'étape 605 et jusqu'à la nouvelle date de sortie de quarantaine calculée à l'étape 607. A partir de la date de sortie de quarantaine, le routeur 110 autorise à nouveau des communications entre le dispositif 121b et le réseau local 120. Un commutateur réseau accepte alors à nouveau des paquets en provenance de l'adresse MAC dudit dispositif. Un point d'accès Wi-Fi peut supprimer ladite adresse MAC de la liste d'adresses MAC interdites d'association audit point d'accès Wi-Fi. Alternativement, le routeur 110 supprime la règle de filtrage insérée au moment de la mise en quarantaine et ayant pour action d'abandonner un paquet en provenance de l'adresse MAC dudit dispositif 121b.

Optionnellement, aux étapes 605 et 608, une notification d'erreur est envoyée à un administrateur du réseau local 120, par exemple par mail ou par l'intermédiaire d'une console de gestion, de sorte que ledit administrateur du réseau local 120 puisse intervenir lors d'un redémarrage du dispositif 121b utilisant une adresse IP illicite, afin d'autoriser à nouveau des communications entre le dispositif 121b et le réseau local 120 après la date de sortie de quarantaine.

La **Fig. 7** illustre schématiquement l'architecture matérielle du routeur 110 selon un mode de réalisation. Le routeur 110 comporte alors, reliés par un bus de communication 710 ; un processeur ou CPU (« Central Processing Unit » en anglais) 701 ; une mémoire vive RAM 702 ; une mémoire morte ROM (« Read Only Memory » en anglais) 703 ; une unité de stockage 704, telle qu'un disque dur HDD (« Hard Disk Drive » en anglais), ou un lecteur de support de stockage, tel qu'un lecteur de cartes SD (« Secure Digital » en anglais) ; et une interface COM 705 permettant de communiquer avec des périphériques réseaux.

Le processeur CPU 701 est capable d'exécuter des instructions chargées dans la RAM 702 à partir de la ROM 703, d'une mémoire externe (telle qu'une carte SD), d'un support de stockage, ou d'un réseau de communication. Lorsque le routeur 110 est mis sous tension, le processeur CPU 701 est capable de lire de la RAM 702 des instructions et de les exécuter. Ces instructions forment un programme d'ordinateur causant l'implémentation, par le processeur CPU 701, de tout ou partie des étapes décrites ici en relation avec le routeur 110. Tout ou partie desdites étapes peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

## Revendications

1. Procédé de signalisation d'une utilisation d'une adresse IP invalide dans un réseau de communication local (120), le réseau de communication local (120) étant relié à un autre réseau de communication (130) par l'intermédiaire d'un routeur (110), une adresse IP invalide étant une adresse IP expirée ou inconnue du routeur (110), le procédé comprenant les étapes, réalisées par le routeur (110), de :
- Recevoir (200) un paquet d'au moins un dispositif (121b) appartenant audit réseau de communication local (120), ledit paquet reçu comprenant une adresse IP source invalide,
- Générer (204) un paquet de message d'erreur et marquer ledit paquet de message d'erreur avec une marque prédéfinie, et
- Renvoyer (206) audit au moins un dispositif (121b) le paquet de message d'erreur marqué en utilisant une table de routage annexe redirigeant chaque paquet vers le réseau de communication local et une règle de routage appliquant ladite table de routage annexe à chaque paquet marqué avec ladite marque prédéfinie.

2. Procédé selon la revendication 1, le procédé comportant en outre de marquer (202) le paquet reçu avec ladite marque prédéfinie et rejeter le paquet reçu.

3. Procédé selon l'une des revendications 1 ou 2, le procédé comprenant en outre :
- Enregistrer (304) dans une table, dite table des adresses IP invalides, un identifiant du dispositif (121b) utilisant ladite adresse IP source invalide, en association avec un compteur de paquets reçus initialisé à une valeur initiale, et en association avec une date de réception dudit paquet reçu, dite date de première réception, si ledit identifiant est absent de la table des adresses IP invalides,
- Actualiser (306) la table des adresses IP invalides si l'identifiant dudit dispositif (121b) est présent dans la table des adresses IP invalides.

4. Procédé selon la revendication 3, dans lequel une première période étant définie avec une première durée prédéfinie, ladite première période étant comptée à partir de la date de première réception (3062), dans lequel une deuxième période étant définie avec une deuxième durée prédéfinie, ladite deuxième durée prédéfinie étant plus courte que la première durée prédéfinie et se terminant en même temps que la première période, et dans lequel actualiser la table des adresses IP invalides comprend incrémenter (3067) le compteur de paquets reçus pour chaque paquet reçu pendant la deuxième période si une date de déconnexion dudit dispositif (121b) n'est pas renseignée (3061) dans la table des adresses IP invalides.

5. Procédé selon la revendication 3, dans lequel une première période étant définie avec une première durée prédéfinie, ladite première période étant comptée à partir d'une date de déconnexion (3063) dudit dispositif (121b), dans lequel une deuxième période étant définie avec une deuxième durée prédéfinie, ladite deuxième durée prédéfinie étant plus courte que la première durée prédéfinie et se terminant en même temps que la première période, et dans lequel actualiser la table des adresses IP invalides comprend incrémenter (3067) le compteur de paquets reçus pour chaque paquet reçu pendant la deuxième période, si ladite date de déconnexion dudit dispositif (121b) est renseignée (3061) dans la table des adresses IP invalides.

6. Procédé selon la revendication 4 ou 5 comprenant en outre l'étape de supprimer (314) l'identifiant de la table des adresses IP invalides dans le cas où la première période est écoulée et le compteur de paquets reçus est égal à ladite valeur initiale.

7. Procédé selon l'une des revendications 4 ou 5 comprenant en outre l'étape de forcer (3121) le dispositif (121b) à réinitialiser son interface réseau en le déconnectant dudit réseau de communication local, enregistrer la date de déconnexion dans ladite table des adresses IP invalides et réinitialiser ledit compteur de paquets reçus à la valeur initiale, dans le cas où la première période est écoulée et le compteur de paquets reçus est différent de ladite valeur initiale.

8. Procédé selon l'une des revendications 5 ou 7, comportant en outre : empêcher (3123), pendant une durée de quarantaine configurée, toute communication avec ledit dispositif (121b) lorsque la première période est écoulée, si une date de déconnexion d'une interface réseau dudit dispositif est renseignée (3120) dans ladite table, et si le compteur de paquets reçus est différent de la valeur initiale.

9. Procédé selon la revendication précédente, dans lequel la durée de quarantaine configurée augmente à chaque nouvelle quarantaine, une quarantaine étant une période pendant laquelle toute communication avec le dispositif (121b) est empêchée.

10. Procédé selon la revendication 9 dans lequel la durée de quarantaine est égale à n*Dt où n est un nombre de quarantaines et Dt est une durée initiale de quarantaine.

11. Procédé selon la revendication 9 dans lequel la durée de quarantaine est égale à 2^{(*n*-1)} * *Dt* où n est un nombre de quarantaines et Dt est une durée initiale de quarantaine.

12. Procédé selon l'une des revendications 1 à 11 dans lequel le premier réseau de communication (120) et l'autre réseau de communication (130) utilisent le protocole de communication IPv6.

13. Un routeur reliant un réseau de communication local (120) à un autre réseau de communication (130), le routeur comportant:
- des moyens pour recevoir (200) un paquet d'au moins un dispositif (121b) appartenant audit réseau de communication local (120), ledit paquet reçu comprenant une adresse IP source invalide, une adresse IP invalide étant une adresse IP expirée ou inconnue du routeur (110),
- des moyens pour générer un paquet de message d'erreur et pour marquer ledit paquet de message d'erreur avec une marque prédéfinie, et
- des moyens pour renvoyer (206) audit au moins un dispositif le paquet de message d'erreur marqué en utilisant une table de routage annexe redirigeant chaque paquet vers le réseau de communication local (120) et une règle de routage appliquant ladite table de routage annexe à chaque paquet marqué avec ladite marque prédéfinie.

14. Un routeur selon la revendication 13 comportant en outre :
- des moyens pour enregistrer (304) dans une table, dite table des adresses IP invalides, un identifiant du dispositif (121b) utilisant ladite adresse IP source invalide, en association avec un compteur de paquets reçus initialisé à une valeur initiale, et en association avec une date de réception dudit paquet reçu, dite date de première réception, si ledit identifiant est absent de la table des adresses IP invalides,
- des moyens pour actualiser (306) la table des adresses IP invalides, si l'identifiant dudit dispositif (121b) est présent dans la table des adresses IP invalides.

15. Un routeur selon la revendication 14 dans lequel lesdits moyens pour actualiser (306) la table des adresses IP invalides comprennent des moyens pour incrémenter (3067) le compteur de paquets reçus pour chaque paquet reçu pendant une deuxième période si une date de déconnexion dudit dispositif (121b) n'est pas renseignée (3061) dans la table des adresses IP invalides, une première période étant définie avec une première durée prédéfinie, la première période étant comptée à partir de la date de première réception (3062), la deuxième période étant définie avec une deuxième durée prédéfinie, la deuxième durée prédéfinie étant plus courte que la première durée prédéfinie et se terminant en même temps que la première période.

16. Un routeur selon la revendication 14 dans lequel lesdits moyens pour actualiser (306) la table des adresses IP invalides comprennent des moyens pour incrémenter (3067) le compteur de paquets reçus pour chaque paquet reçu pendant une deuxième période, si ladite date de déconnexion dudit dispositif (121b) est renseignée (3061) dans la table des adresses IP invalides, une première période étant définie avec une première durée prédéfinie, la première période étant comptée à partir d'une date de déconnexion (3063) dudit dispositif (121b), la deuxième période étant définie avec une deuxième durée prédéfinie, la deuxième durée prédéfinie étant plus courte que la première durée prédéfinie et se terminant en même temps que la première période.

17. Un routeur selon la revendication 15 ou 16 comportant en outre des moyens pour supprimer (314) l'identifiant de la table des adresses IP invalides dans le cas où la première période est écoulée et le compteur de paquets reçus est égal à ladite valeur initiale.

18. Un routeur selon la revendication 15 ou 16 comportant en outre des moyens pour forcer (3121) le dispositif (121b) à réinitialiser son interface réseau en le déconnectant dudit réseau de communication local (120), enregistrer la date de déconnexion dans ladite table des adresses IP invalides et réinitialiser ledit compteur de paquets reçus à la valeur initiale, dans le cas où la première période est écoulée et le compteur de paquets reçus est différent de ladite valeur initiale.

19. Un programme d'ordinateur, comprenant des instructions pour implémenter, par un processeur, le procédé selon l'une quelconque des revendications 1 à 11, lorsque ledit programme est exécuté par ledit processeur.

20. Un support de stockage d'informations, stockant un programme d'ordinateur comprenant des instructions pour implémenter, par un processeur, le procédé selon l'une quelconque des revendications 1 à 11, lorsque ledit programme est exécuté par ledit processeur.

## Patentansprüche

1. Verfahren zur Signalisierung einer Nutzung einer ungültigen IP-Adresse in einem lokalen Kommunikationsnetz (120), wobei das lokale Kommunikationsnetz (120) über einen Router (110) mit einem anderen Kommunikationsnetz (130) verbunden ist, wobei eine ungültige IP-Adresse eine abgelaufene oder dem Router (110) unbekannte IP-Adresse ist, wobei das Verfahren die folgenden vom Router (110) durchgeführten Schritte umfasst:
- Empfangen (200) eines Pakets von mindestens einer Vorrichtung (121b), die zum lokalen Kommunikationsnetz (120) gehört, wobei das empfangene Paket eine ungültige IP-Quelladresse umfasst,
- Erzeugen (204) eines Fehlernachrichtenpakets und Markieren des Fehlernachrichtenpakets mit einer vorgegebenen Markierung und
- Zurücksenden (206) des markierten Fehlernachrichtenpakets an die mindestens eine Vorrichtung (121b) unter Verwendung einer angehängten Routing-Tabelle, die jedes Paket zum lokalen Kommunikationsnetz zurückleitet, und einer Routing-Regel, die die angehängte Routing-Tabelle auf jedes mit der vorgegebenen Markierung markierte Paket anwendet.

2. Verfahren nach Anspruch 1, wobei das Verfahren außerdem Markieren (202) des empfangenen Pakets mit der vorgegebene Markierung und Ablehnen des empfangenen Pakets umfasst.

3. Verfahren nach einem der Ansprüche 1 oder 2, wobei das Verfahren außerdem umfasst:
- Speichern (304) einer Kennung der Vorrichtung (121b), die die ungültige IP-Quelladresse verwendet, in einer Tabelle, Tabelle der ungültigen IP-Adressen genannt, in Verbindung mit einem Zähler für empfangene Pakete, der auf einen Anfangswert initialisiert wurde, und in Verbindung mit einem Empfangsdatum des empfangenen Pakets, Datum des ersten Empfangs genannt, falls die Kennung in der Tabelle der ungültigen IP-Adressen nicht vorhanden ist,
- Aktualisieren (306) der Tabelle der ungültigen IP-Adressen, falls die Kennung der Vorrichtung (121b) in der Tabelle der ungültigen IP-Adressen vorhanden ist.

4. Verfahren nach Anspruch 3, wobei ein erster Zeitraum mit einer vorgegebenen Dauer definiert ist, wobei der erste Zeitraum ab dem Datum der ersten Empfangs (3062) gezählt wird, wobei ein zweiter Zeitraum mit einer vorgegebenen zweiten Dauer definiert ist, wobei die vorgegebene zweite Dauer kürzer ist als die vorgegebene erste Dauer und gleichzeitig mit dem ersten Zeitraum endet und wobei Aktualisieren der Tabelle der ungültigen IP-Adressen Inkrementieren (3067) des Zählers für empfangene Pakete für jedes Paket umfasst, das während des zweiten Zeitraums empfangen wird, falls ein Datum der Trennung der Vorrichtung (121b) in der Tabelle der ungültigen IP-Adressen nicht angegeben ist (3061).

5. Verfahren nach Anspruch 3, wobei ein erster Zeitraum mit einer vorgegebenen ersten Dauer definiert ist, wobei der erste Zeitraum ab einem Datum der Trennung (3063) der Vorrichtung (121b) gezählt wird, wobei ein zweiter Zeitraum mit einer vorgegebenen zweiten Dauer definiert ist, wobei die vorgegebene zweite Dauer kürzer ist als die vorgegebene erste Dauer und gleichzeitig mit der ersten Dauer endet und wobei Aktualisieren der Tabelle der ungültigen IP-Adressen Inkrementieren (3067) des Zählers für empfangene Pakete für jedes Paket umfasst, das während des zweiten Zeitraums empfangen wird, falls das Datum der Trennung der Vorrichtung (121b) in der Tabelle der ungültigen IP-Adressen angegeben ist (3061).

6. Verfahren nach Anspruch 4 oder 5, das außerdem einen Schritt des Unterdrückens (314) der Kennung aus der Tabelle der ungültigen IP-Adressen in dem Fall umfasst, in dem der erste Zeitraum verstrichen ist und der Zähler für empfangene Paket gleich dem Anfangswert ist.

7. Verfahren nach einem der Ansprüche 4 oder 5, das außerdem den Schritt des Zwingens (3121) der Vorrichtung (121b), ihre Netzschnittstelle durch Trennen vom lokalen Kommunikationsnetz zu reinitialisieren, des Speicherns des Datums der Trennung in der Tabelle der ungültigen IP-Adressen und des Reinitialisierens des Zählers für empfangene Pakete auf den Anfangswert in dem Fall umfasst, in dem der erste Zeitraum verstrichen ist und der Zähler für empfangene Pakete sich vom Anfangswert unterscheidet.

8. Verfahren nach einem der Ansprüche 5 oder 7, das außerdem umfasst: Verhindern (3123) jeglicher Kommunikation mit der Vorrichtung (121b) während einer konfigurierten Quarantänedauer, wenn der erste Zeitraum verstrichen ist, falls ein Datum einer Trennung einer Netzschnittstelle der Vorrichtung in der Tabelle angegeben ist (3120) und falls der Zähler für empfangene Pakete sich vom Anfangswert unterscheidet.

9. Verfahren nach dem vorhergehenden Anspruch, wobei eine konfigurierte Quarantänedauer sich bei jeder neuen Quarantäne erhöht, wobei eine Quarantäne ein Zeitraum ist, während dessen jegliche Kommunikation mit der Vorrichtung (121b) verhindert wird.

10. Verfahren nach Anspruch 9, wobei die Quarantänedauer gleich n*Dt ist, wobei n eine Anzahl von Quarantänen und Dt eine Anfangsdauer einer Quarantäne ist.

11. Verfahren nach Anspruch 9, wobei die Quarantänedauer gleich 2^{*n*-1} * *Dt* ist, wobei n eine Anzahl von Quarantänen und Dt eine Anfangsdauer einer Quarantäne ist.

12. Verfahren nach einem der Ansprüche 1 bis 11, wobei das erste Kommunikationsnetz (120) und das andere Kommunikationsnetz (130) das Kommunikationsprotokoll IPv6 nutzen.

13. Router, der ein lokales Kommunikationsnetz (120) mit einem anderen Kommunikationsnetz (130) verbindet, wobei der Router umfasst:
- Mittel zum Empfangen (200) eines Pakets von mindestens einer Vorrichtung (121b), die zum lokalen Kommunikationsnetz (120) gehört, wobei das empfangene Paket eine ungültige IP-Quelladresse umfasst, wobei eine ungültige IP-Adresse eine abgelaufene oder dem Router (110) unbekannte IP-Adresse ist.
- Mittel zum Erzeugen eines Fehlernachrichtenpakets und zum Markieren des Fehlernachrichtenpakets mit einer vorgegebenen Markierung und
- Mittel zum Zurücksenden (206) des markierten Fehlernachrichtenpakets an die mindestens eine Vorrichtung unter Verwendung einer angehängten Routing-Tabelle, die jedes Paket zum lokalen Kommunikationsnetz (120) zurückleitet, und einer Routing-Regel, die die angehängte Routing-Tabelle auf jedes mit der vorgegebenen Markierung markierte Paket anwendet.

14. Router nach Anspruch 13, der außerdem umfasst:
- Mittel zum Speichern (304) einer Kennung der Vorrichtung (121b), die die ungültige IP-Quelladresse verwendet, in einer Tabelle, Tabelle der ungültigen IP-Adressen genannt, in Verbindung mit einem Zähler für empfangene Pakete, der auf einen Anfangswert initialisiert wurde, und in Verbindung mit einem Empfangsdatum des empfangenen Pakets, Datum des ersten Empfangs genannt, falls die Kennung in der Tabelle der ungültigen IP-Adressen nicht vorhanden ist,
- Mittel zum Aktualisieren (306) der Tabelle der ungültigen IP-Adressen, falls die Kennung der Vorrichtung (121b) in der Tabelle der ungültigen IP-Adressen vorhanden ist.

15. Router nach Anspruch 14, wobei die Mittel zum Aktualisieren (306) der Tabelle der ungültigen IP-Adressen Mittel zum Inkrementieren (3067) des Zählers für empfangene Pakete für jedes während eines zweiten Zeitraums empfangenen Pakets umfasst, falls ein Datum der Trennung der Vorrichtung (121b) in der Tabelle der ungültigen IP-Adressen nicht angegeben ist (3061), wobei ein erster Zeitraum mit einer vorgegebenen ersten Dauer definiert ist, wobei der erste Zeitraum ab dem Datum der ersten Empfangs (3062) gezählt wird, wobei der zweite Zeitraum mit einer vorgegebenen zweiten Dauer definiert ist, wobei die vorgegebene zweite Dauer kürzer ist als die vorgegebene erste Dauer und gleichzeitig mit dem ersten Zeitraum endet.

16. Router nach Anspruch 14, wobei die Mittel zum Aktualisieren (306) der Tabelle der ungültigen IP-Adressen Mittel zum Inkrementieren (3067) des Zählers für empfangene Pakete für jedes während eines zweiten Zeitraums empfangenen Pakets umfasst, falls das Datum der Trennung der Vorrichtung (121b) in der Tabelle der ungültigen IP-Adressen angegeben ist (3061), wobei ein erster Zeitraum mit einer vorgegebenen ersten Dauer definiert ist, wobei der erste Zeitraum ab dem Datum der Trennung (3063) der Vorrichtung (121b) gezählt wird, wobei der zweite Zeitraum mit einer vorgegebenen zweiten Dauer definiert ist, wobei die vorgegebene zweite Dauer kürzer ist als die vorgegebene erste Dauer und gleichzeitig mit dem ersten Zeitraum endet.

17. Router nach Anspruch 15 oder 16, der außerdem Mittel zum Unterdrücken (314) der Kennung aus der Tabelle der ungültigen IP-Adressen in dem Fall umfasst, in dem der erste Zeitraum verstrichen ist und der Zähler für empfangene Pakete gleich dem Anfangswert ist.

18. Router nach Anspruch 15 oder 16, der außerdem Mittel zum Zwingen (3121) der Vorrichtung (121b), ihre Netzschnittstelle durch Trennen vom lokalen Kommunikationsnetz (120) zu reinitialisieren, zum Speichern des Datums der Trennung in der Tabelle der ungültigen IP-Adressen und zum Reinitialisieren des Zählers für empfangene Pakete auf den Anfangswert in dem Fall umfasst, in dem der erste Zeitraum verstrichen ist und der Zähler für empfangene Pakete sich vom Anfangswert unterscheidet.

19. Computerprogramm, das Anweisungen zum Implementieren des Verfahrens nach einem der Ansprüche 1 bis 11 durch einen Prozessor umfasst, wenn das Programm von dem Prozessor ausgeführt wird.

20. Informationsspeichermedium, das ein Computerprogramm speichert, das Anweisungen zum Implementieren des Verfahrens nach einem der Ansprüche 1 bis 11 durch einen Prozessor umfasst, wenn das Programm von dem Prozessor ausgeführt wird.

## Claims

1. Method for indicating a use of an illicit IP address in a local communication network (120), the local communication network (120) being connected to another communication network (130) by means of a router (110), an illicit IP address being an IP address that has expired or is unknown to the router, the method comprising the steps, performed by the router (110), of:
- receiving (200) a packet from at least one device (121b) belonging to said local communication network (120), said received packet comprising an illicit source IP address;
- generating (204) an error message packet and marking said error message packet with a predefined mark; and
- returning (206) the marked error message packet to said at least one device (121b) using a related routing table redirecting each packet to the local communication network and a routing rule applying said related routing table to each packet marked with said predefined mark.

2. Method according to claim 1, the method further comprising marking (202) the packet received with said predefined mark and rejecting the packet received.

3. Method according to one of claims 1 or 2, the method further comprising:
- recording (304) in a table, referred to as an illicit IP address table, an identifier of the device (121b) using said illicit source IP address, in association with a received-packet counter initialised to an initial value, and in association with a time of reception of said received packet, referred to as a first reception time, if said identifier is absent from the table of illicit IP addresses;
- updating (306) the table of illicit IP addresses if the identifier of said device (121b) is present in the table of illicit IP addresses.

4. Method according to claim 3, wherein a first period being defined with a first predefined duration, said first period being counted as from the time of first reception (3062), wherein a second period being defined with a second predefined duration, said second predefined duration being shorter than the first predefined duration and terminating at the same time as the first period, and wherein updating the table of illicit IP addresses comprises incrementing (3067) the received-packet counter for each packet received during the second period if a time of disconnection of said device (121b) is not given (3061) in the table of illicit IP addresses.

5. Method according to claim 3, wherein a first period being defined with a first predefined duration, said first period being counted as from a time of disconnection (3063) of said device (121b), wherein a second period being defined with a second predefined duration, said second predefined duration being shorter than the first predefined duration and terminating at the same time as the first period, and wherein updating the table of illicit IP addresses comprises incrementing (3067) the received-packet counter for each packet received during the second period, if said time of disconnection of said device (121b) is given (3061) in the table of illicit IP addresses.

6. Method according to claim 4 or 5, further comprising the step of deleting (314) the identifier from the table of illicit IP addresses in the case where the first period has elapsed and the received-packet counter is equal to said initial value.

7. Method according to one of claims 4 or 5, further comprising the step of forcing (3121) the device (121b) to reinitialise its network interface by disconnecting it from said local communication network, recording the time of disconnection in said table of illicit IP addresses and reinitialising said received-packet counter to the initial value, in the case where the first period has elapsed and the received-packet counter is different from said initial value.

8. Method according to one of claims 5 or 7, further comprising: preventing (3123), during a configured quarantine duration, any communication with said device (121b) when the first period has elapsed, if a time of disconnection of a network interface of said device is given (3120) in said table, and if the received-packet counter is different from the initial value.

9. Method according to the preceding claim, wherein the configured quarantine duration increases at each new quarantine, a quarantine being a period during which any communication with the device (121b) is prevented.

10. Method according to claim 9, wherein the quarantine duration is equal to n*Dt where n is a number of quarantines and Dt is an initial quarantine duration.

11. Method according to claim 9, wherein the quarantine duration is equal to 2^{(*n*-1)} * *Dt* where n is a number of quarantines and Dt is an initial quarantine duration.

12. Method according to one of claims 1 to 11, wherein the first communication network (120) and the other communication network (130) use the IPv6 communication protocol.

13. A router connecting a local communication network (120) to another communication network (130), the router comprising:
- means for receiving (200) a packet from at least one device (121b) belonging to said local communication network (120), said received packet comprising an illicit source IP address, an illicit IP address being an IP address that has expired or is unknown to the router,
- means for generating an error message packet and for marking said error message packet with a predefined mark, and
- means for returning (206) the marked error message packet to said at least one device using a related routing table redirecting each packet to the local communication network (120) and a routing rule applying said related routing table to each packet marked with said predefined mark.

14. A router according to claim 13, further comprising:
- means for recording (304) in a table, referred to as an illicit IP address table, an identifier of the device (121b) using said illicit source IP address; in association with a received-packet counter initialised to an initial value, and in association with a time of reception of said received packet, referred to as the time of first reception, if said identifier is absent from the table of illicit IP addresses,
- means for updating (306) the table of illicit IP addresses, if the identifier of said device (121b) is present in the table of illicit IP addresses.

15. A router according to claim 14, wherein said means for updating (306) the table of illicit IP addresses comprise means for incrementing (3067) the received-packet counter for each packet received during a second period if a time of disconnection of said device (121b) is not given (3061) in the table of illicit IP addresses, a first period being defined with a first predefined duration, the first period being counted as from the time of first reception (3062), the second period being defined with a second predefined duration, the second predefined duration being shorter than the first predefined duration and terminating at the same time as the first period.

16. A router according to claim 14, wherein said means for updating (306) the table of illicit IP addresses comprise means for incrementing (3067) the received-packet counter for each packet received during a second period, if said time of disconnection of said device (121b) is given (3061) in the table of illicit IP addresses, a first period being defined with a first predefined duration, the first period being counted as from a time of disconnection (3063) of said device (121b), the second period being defined with a second predefined duration, the second predefined duration being shorter than the first predefined duration and terminating at the same time as the first period.

17. A router according to claim 15 or 16, further comprising means for deleting (314) the identifier from the table of illicit IP addresses in the case where the first period has elapsed and the received-packet counter is equal to said initial value.

18. A router according to claim 15 or 16, further comprising means for forcing (3121) the device (121b) to reinitialise its network interface by disconnecting it from said local communication network (120), recording the time of disconnection in said table of illicit IP addresses and reinitialising said received-packet counter to the initial value, in the case where the first period has elapsed and the received-packet counter is different from said initial value.

19. A computer program, comprising instructions for implementing, by a processor, the method according to any one of claims 1 to 11, when said program is executed by said processor.

20. An information storage medium, storing a computer program comprising instructions for implementing, by a processor, the method according to any one of claims 1 to 11, when said program is executed by said processor.
